# EUROPEAN PATENT APPLICATION

(11) **EP 3 447 964 A1**
(43) Date of publication of application: **27.02.2019**
(21) Application number: 17187976.0
(22) Date of filing: 25.08.2017
(51) Int. Cl.: H04L 12/14, H04M 15/00, H04W 4/24

(54) **METHOD AND DEVICE FOR ALLOCATING DATA ALLOWANCE**

(71) Applicant: Vestel Elektronik Sanayi ve Ticaret A.S., 45030 Manisa (TR)
(72) Inventor: ÇUBUKÇU,, Baran, 45030 Manisa (TR)
(74) Representative: Flint, Adam

(57) **Abstract**

A method of allocating data allowance for downloading of data over a network is disclosed. A quota period (330) is divided into a plurality of sub-periods (330a, 330b) and a total data allowance (320) for the quota period (330) is divided into a plurality of sub-allowances (320a, 320b). Respective sub-allowances (320a, 320b) are allocated to respective sub-periods (330a, 330b).

## Description

### Technical Field

The present disclosure relates to a method and device for allocating data allowance for downloading of data over a network.

### Background

Electronic devices, such as smartphones, laptop, desktop and tablet computers, etc., typically connect to a network using an Internet Service Provider (ISP) or cellular telephone network provider or the like in order to download and upload content over the network. The service provider may set a cap or data allowance for the amount of data that can be downloaded and/or uploaded in a certain period of time (typically per month). If that data allowance is reached, the user may not be permitted to download or upload further content during that period or may be required to pay more in order to download or upload further content during that period.

### Summary

According to a first aspect disclosed herein, there is provided method of allocating data allowance for downloading of data over a network; the method comprising: identifying a total data allowance for a quota period; dividing the quota period into a plurality of sub-periods; dividing the total data allowance into a plurality of sub-allowances; and allocating respective sub-allowances to respective sub-periods.

In an example, the method comprises: determining, at the end of a sub-period, a difference between a data usage and the sub-allowance for the sub-period; and re-allocating the difference to one or more of the remaining sub-periods.

In an example the difference is an unused data allowance; and said re-allocating comprises increasing the respective sub-allowance of at least one remaining sub-period.

In an example the difference is an exceeded data allowance; and said re-allocating comprises decreasing the respective sub-allowance of at least one remaining sub-period.

In an example the step of re-allocating comprises allocating the difference equally among all remaining sub-periods.

In an example the step of re-allocating comprises allocating all of the difference to a next one of the sub-periods.

In an example the method comprises receiving user input specifying the sub-periods into which the quota period is divided.

In an example the quota period is a month.

In an example the plurality of sub-periods are days; and a first sub-allowance amount is allocated to weekdays and a second sub-allowance amount is allocated to weekends.

In an example the total data allowance is first subdivided between a plurality of users, and the method of claim 1 is applied to each user's allocated amount.

In an example the method comprises: identifying a request for download of a data item having a file size; determining that the file size exceeds a threshold size; and generating a warning, in response to said determination, that the file size exceeds the threshold size.

In an example the threshold size is a remaining amount of sub-allocation for the sub-period in which the request for download of the data item occurs.

In an example the threshold size is a predetermined fraction of a remaining amount of the total data allowance.

In an example the threshold size is a predetermined fraction of a remaining amount of the sub-allowance for that sub-period.

There is also provided a method of downloading data over a network for which a data allowance has been allocated as described above.

In an example the method comprises downloading in a sub-period less than or equal to the respective sub-allowance for that sub-period.

According to a second aspect disclosed herein, there is provided a device for downloading data content from a network, the device comprising: an interface for connecting to the network; and a processor configured to: identify a total data allowance for a quota period; divide the quota period into a plurality of sub-periods; divide the total data allowance into a plurality of sub-allowances; allocate respective sub-allowances to respective sub-periods; and within a given sub-period, limit downloading of data content to the respective sub-allowance.

There is also provided a computer program comprising instructions such that when the computer program is executed on a computing device, the computing device is arranged to carry out a method as described above.

### Brief Description of the Drawings

To assist understanding of the present disclosure and to show how embodiments may be put into effect, reference is made by way of example to the accompanying drawings in which:
Figure 1 shows schematically an example of a computer network;
Figure 2 shows an example graph of data usage;
Figure 3 shows an example graph of data usage in accordance with embodiments of the present invention;
Figure 4 shows another example graph of data usage in accordance with embodiments of the present invention;
Figure 5 shows another example graph of data usage in accordance with embodiments of the present invention;
Figure 6 illustrates diagrammatically allocation of data allowance to days of a month;
Figure 7 illustrates diagrammatically allocation of data allowance to different users;
Figure 8 shows a graph illustrating an example of generating a warning; and
Figure 9 shows a graph illustrating another example of generating a warning.

### Detailed Description

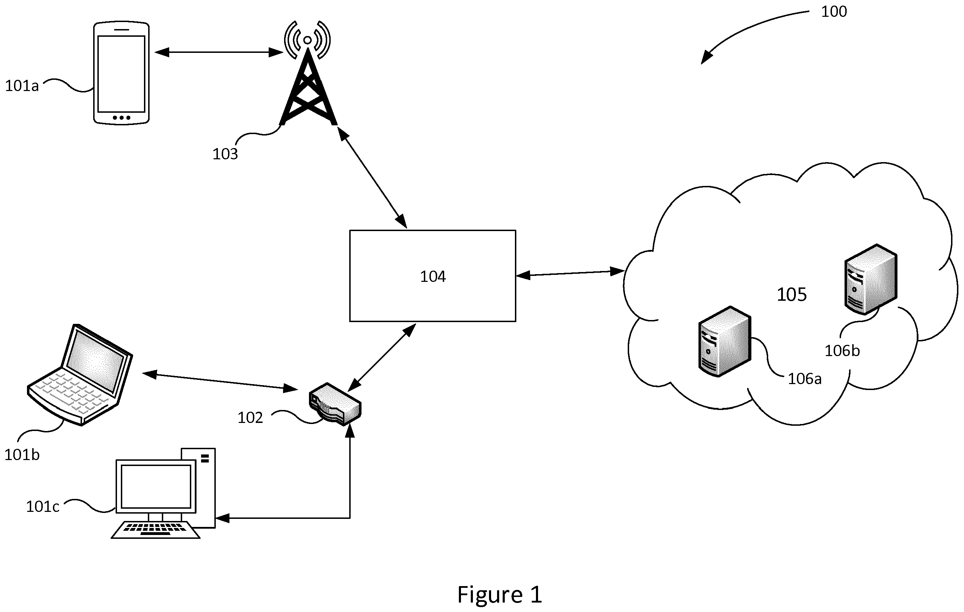

Figure 1 shows schematically an example of a computer network 100. The network 100 comprises a plurality of user devices 101a-c, a router 102, a cell phone tower or base station 103, a service provider 104, and a Wide Area Network (WAN) 105. The WAN 105 comprises a plurality of servers 106a-b. The service provider 104 is connected to the cell phone tower 103, the router 102, and the WAN 105. It is understood that network 100 is an exemplary network only, that other network topologies are possible, and that in general the network 100 will be much more complex than that shown schematically in Figure 1. For example, WAN 105 may be the Internet which comprises millions of servers 106. The servers 106 may be interconnected directly by one or more wired or wireless connections and/or may be connected via one or more routing devices not shown in Figure 1.

The service provider 104 acts an entry point to the WAN 105 for each of the user device 101a-c. As the service provider 104 has a finite bandwidth available, and given the potential for large number of user devices 101 requesting data content, the service provider 104 may limit the amount of data a given user device 101 is permitted to download in a particular time period. Two exemplary connections are shown in Figure 1.

In a first example, a cellular user device 101a (e.g. a smartphone or tablet device) is operatively coupled to the base station 103 via a wireless connection. In this case, the base station 103 is operated by a cellular network provider, which is an example of a service provider 104. Hence, cellular user device 101a is able to access the WAN 105 using the cellular network.

In a second example, a laptop computer 101b and a desktop computer 101c are operatively coupled to the router 102 by one or more wired or wireless connections. For example, user device 101b is shown in Figure 1 as a laptop arranged to connect to the router 102 via a wireless connection such as WiFi. As another example, user device 101c is shown in Figure 1 as a desktop computer arranged to connect to the router 102 via a wired connection such as an Ethernet connection. In this case, the router 102 is connected to an Internet Service Provider (ISP) which is an example of a service provider 104. Hence, laptop computer 101b and desktop computer 101c are able to access the WAN 105 using the ISP.

In either example, the servers 106 store data content such as websites, video files, picture files, etc. Each of the user devices 101a-c is arranged to connect to the WAN 105 and is therefore able to download data content stored on any server 106. The service provider 104 may charge for providing access to the WAN 105.

Routing of data through a computer network such as computer network 100 is well known in the art and so not described in more detail here.

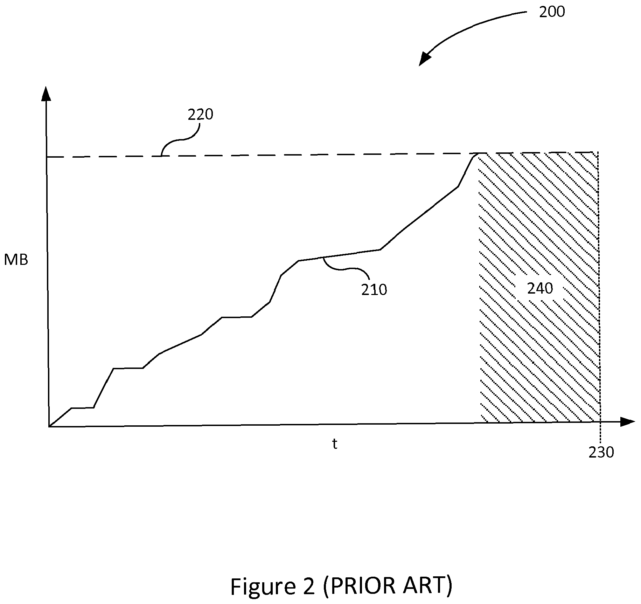

Figure 2 shows a graph 200 illustrating one way in which a service provider 104 may limit data usage 210 of a user device 101. The data usage 210 is shown as a cumulative graph of megabytes (MB) downloaded over time (t). In this example, the user device 101 is limited to a total data allowance 220 for a quota period 230. For example, the data allowance 220 may be 500MB to be used in a one-month quota period 230. The data allowance 220 is applied separately for each successive quota period 230. For example, 500MB may be allocated at the start of each month, irrespective of the last month's data usage. Unused data allowance from the previous month does not carry over to the next month.

Cumulative data usage 210 monotonically increases over the quota period 230. If it reaches the total data allowance 220 before the end of the quota period 230 (as shown in Figure 2), that user device 101 is prevented, by the service provider 104, from downloading further data content. This means that the user of the user device 101 is unable to access data content for the remainder 240 of the quota period 230. In some example, this can potentially mean the user must go hours or even days without Internet access (unless for example the user pays for additional data allowance for the quota period 230 on an ad hoc basis, such additional data allowances often being relatively expensive). Whilst some service providers or devices provide a user with some functionality that enables a user to know when some threshold for downloading of data has been reached, this does not assist the user in metering the usage or planning ahead for downloads.

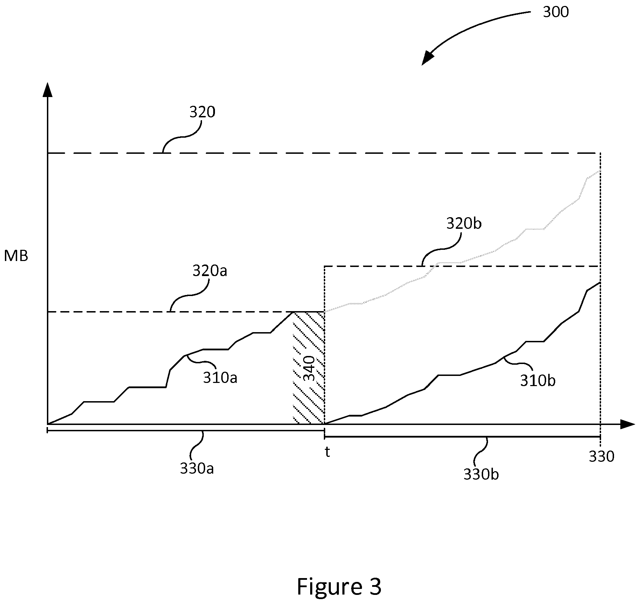

Figure 3 shows a graph 300 illustrating a data allowance allocation method in accordance with an example of the present invention. The method may be performed by the service provider 104 or by the user device 101 itself. In this example, the user device 101 is limited to a total data allowance 320 for a quota period 330.

At the start of the quota period 330, the total data allowance 320 is divided into a first sub-allowance 320a and a second sub-allowance 320b. The total data allowance 320 is therefore the sum of the first sub-allowance 320a and the second sub-allowance.

Similarly, at the start of the quota period 330, the quota period 330 is divided into a first sub-period 330a and a second sub-period 330b. The quota period 330 is therefore the sum of the first sub-period 330a and the second sub-period 330b.

Each sub-period 330a,b is assigned a sub-allowance 320a,b. In this example, sub-allowance 320a is assigned to sub-period 330a and sub-allowance 320b is assigned to sub-period 330b. Hence, the total data allowance 320 has been shared among two sections of the quota period 330.

As the user downloads various data content throughout the quota period 330, the running total data usage increases. The sub-allowance 320a,b acts for its respective sub-period 330a,b as a limit on the amount of downloaded data by the user device 101 in that sub-period 330a,b. Hence, when the data usage 310a in the first sub-period 330a reaches the first sub-allowance 320a (as shown in Figure 3), the user device 101 is prevented from downloading further data content for the remainder 340 of the first sub-period 330a.

At the start of the second sub-period 330b, the user device 101 is once again permitted to download data content. The data usage 310b for the second sub-period 330b is shown starting from zero for the sake of clarity, but it is understood that the total data usage for the entire quota period 330 should be calculated taking the usage in the first period 330a (which is the entire first sub-allowance 320 in this example) into account.

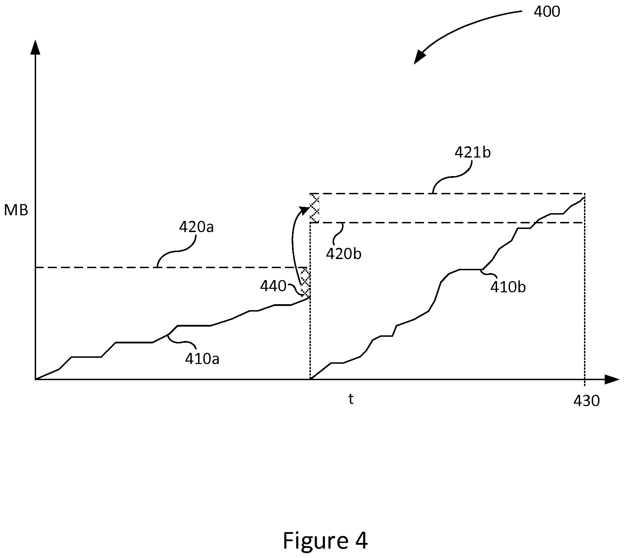

Figure 4 shows another example data usage graph 400. In this example, similarly to the method described above in relation to Figure 3, the total data allowance (not shown) is divided, at the start of a quota period 430, into a first sub-allowance 420a and a second sub-allowance 420b. However, at the end of the first sub-period in this case the data usage 410a is less than the first sub-allowance 420a by an unused amount of data allowance 440. In this example, the unused data allowance 440 is redistributed to the second sub-period. This means that the second sub-allowance 420b is increased to a readjusted level 421b, the increase in this case being equal to the whole unused data allowance 440 from the previous sub-period (which, in turn, may already include unused data allowance from one or more previous sub-periods of the quota period 430 in question, as discussed further below).

It is understood that the redistribution may also be applied to an excess data usage. That is, in some embodiments of the present invention the user may not be blocked from exceeding the first sub-allowance 420a. In these cases, the data usage 410a may, at the end of the first sub-period, exceed the first sub-allowance 420a by an excess amount (rather than falling short by an unused amount, as in Figure 4). The excess amount may be considered as a negative unused amount. The excess amount can then be redistributed to the second sub-period 410b in the same manner, resulting in a reduction of the second sub-allowance 420b which had initially been allocated.

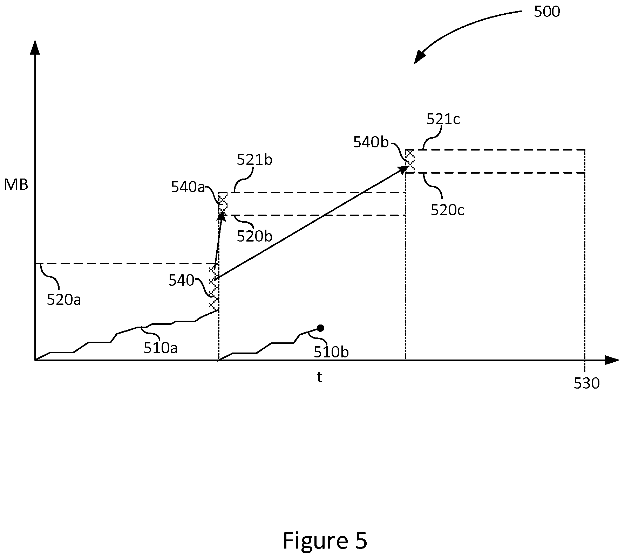

Figure 5 shows a further example data usage graph 500 in which the data allowance (not shown) for a quota period 530 is split into three sub-allowances 520a-c across three sub-periods. In this example, the data usage 510a in the first sub-period once again does not hit the first sub-allowance 520a. The resulting unused data allowance 540 can therefore be redistributed to the remaining sub-periods. In contrast to the example of Figure 4 however, there is, in this case, more than one sub-period remaining. There are two options: 1) allocate all the unused data allowance 540 to the next sub-period, or 2) allocate the unused data allowance 540 equally between all remaining sub-periods. Option 2) is shown in Figure 5; the unused allowance 540 is split into two equal amounts 540a,b and each is added on to the sub-allowance for the two remaining sub-periods. That is, sub-allowance 520b is increased by amount 540a to increased allowance 521b; and sub-allowance 520c is increased by amount 540b to increased allowance 521c. Note that division of the unused allowance 540 need not be equal; amounts 540a and 540b may be different.

Data usage 510b in the second sub-period is not yet complete (this graph 500 shows the situation at half-way through the quota period 530). A similar process of re-allocating unused allowance will be applied at the end of the second sub-period. For this, the new (increased) allowances 521b,c are used.

Note again that similar redistribution techniques can be applied to an excess data usage. For example, the excess amount can be entirely re-allocated to a next one of the sub-periods, or equally split between all remaining sub-periods. In either case, the respective sub-allocation 520b,c of any sub-period to which the excess amount is distributed will decrease, not increase as in the above example.

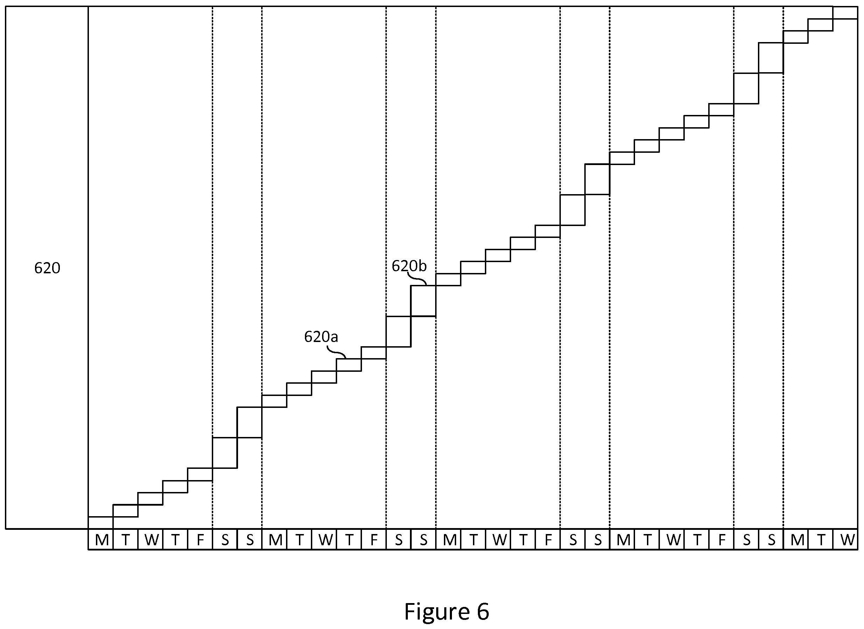

The initial allocation of allowance amounts to sub-periods may be determined differently based on the specific circumstances and user preferences. Figure 6 shows one such example in which a total data allowance 620 is split into 31 sub-periods. For example, the quota period for the total data allowance 620 may be a month and each sub-period may represent a single day.

Typical data usage by a user may vary depending on the day of the week. For example, a user working a five-day week (Monday to Friday) may use far less data during the week than at the weekend (Saturday and Sunday). The allocation of data for such a user may be as shown in Figure 6.

A first amount 620a is allocated to weekdays and a second amount 620b is allocated to weekends. The second amount 620b is larger than the first amount 620a in this example. For example, the weekday amount 620a may be 500MB/day and the weekend amount 620b may be 1.5GB/day.

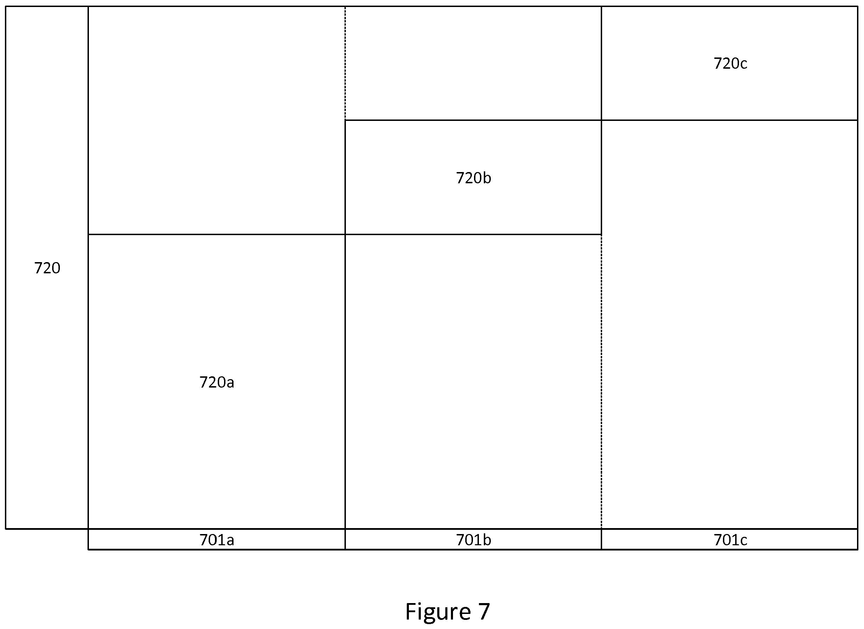

The methods described herein may be applied to multiple user devices 101 which all share the same total data allowance. For example, router 102 may be placed in a user's home where the user pays the service provider 104 for a monthly total data allowance. This total data allowance is applied to the connection to the home as a whole regardless of which user devices 101b-c are using the service, not to the individual user devices 101b-c. In such cases, the total data allowance may first be divided amongst the user devices 101b-c. Figure 7 illustrates such an example.

In Figure 7, the total data allowance 720 is divided amongst three user devices 701a-c. User devices 701a-c are assigned device allowances 720a-c respectively. In this example, user device 701a may be used by an adult, and user devices 701b-c may be used by children. Hence, device allowance 720a (for the adult) may be larger than device allowances 702b-c (for the children), as shown in Figure 7.

The device allowance 720 of a device may be treated as the "total data allowance" for a particular device in the same way as the ("true") total data allowance described herein. For example, device allowances 720b-c for the children may be divided into sub-allocations for different days of the week based on school days and non-school days. An entirely different division into sub-allocations may be applied to device allowance 720a (e.g. equal for all days of the month) for the adult.

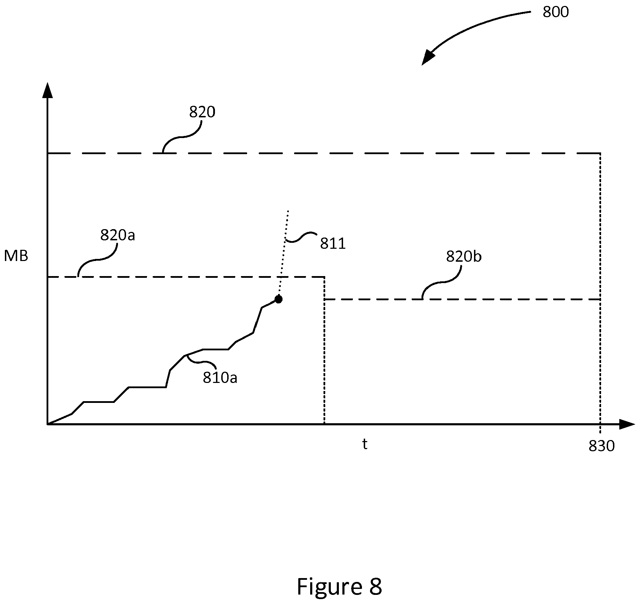

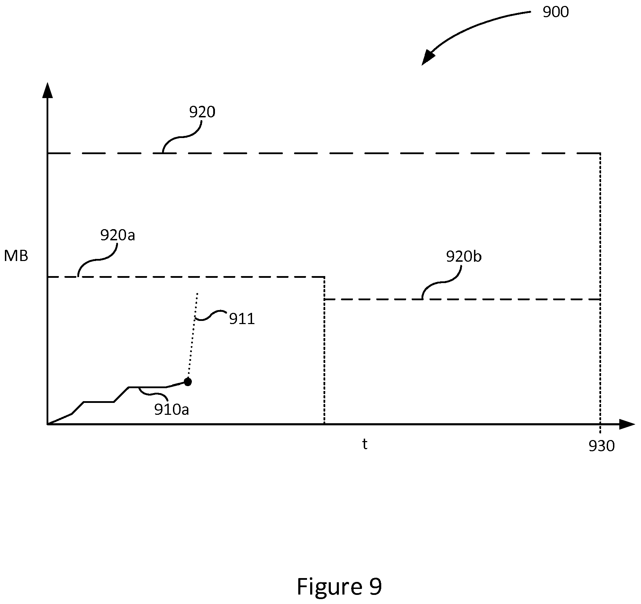

In an example, a warning can be generated when a user attempts to download or stream a piece of data content (e.g. a large file such as a video file). Two example warning mechanisms are shown in Figures 8 and 9.

In Figure 8, a graph 800 is shown (similar to Figures 3, 4 and 5) in which total data allowance 820 for quota period 830 is divided into first sub-allowance 820a and a second sub-allowance 820b. The data usage 810a is shown as nearing the first sub-allowance 820a.

Line 811 represents an attempt by a user of the user device 101 (e.g. by clicking on a hyperlink or some download option) to download data content which would cause the data usage 810a to exceed the first sub-allowance 820a. In response to this attempt, a warning is generated to the user (e.g. by displaying a warning on a graphical user interface of the user device 101) informing the user that downloading the data content would cause the first sub-allowance 820a to be exceeded. The user may also be blocked from downloading the data content. Alternatively, the user may be asked to give permission after being warned about the issue. For example, a notification may be displayed on a display of the user device 101 prompting the user for input regarding whether or not the user wishes to proceed with the download. If the user indicates as wish to proceed, the download will be performed. This will then mean the data usage for that sub-period exceeds the sub-allocation, and therefore at least one of the remaining sub-allocations will be reduced in accordance with the method described above for re-allocating data sub-allowances. If the attempted download occurs in a final one of the sub-periods, the user may not be presented with the option to proceed as there are then no remaining sub-periods which can be re-allocated accordingly.

Figure 9 shows a similar situation, but where a warning is generated despite the fact that the data content would not in fact cause the data usage to exceed the sub-allowance. In this example, the graph 900 shows total data allowance 920 for quota period 930 divided into first sub-allowance 920a and second sub-allowance 920b. Data usage 910a is shown with an attempted download 911 of a large file. The download 911 would not result in the data usage 910a exceeding the first sub-allowance 920a. Nevertheless, a warning may be generated (similar to above in relation to Figure 8) if a file size of the data content is greater than a predetermined fraction of the remaining total data allowance 920 or a predetermined fraction of the remaining sub-allowance 920a (i.e. the sub-allowance for the current period).

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of allocating data allowance for downloading of data over a network; the method comprising:
identifying a total data allowance for a quota period;
dividing the quota period into a plurality of sub-periods;
dividing the total data allowance into a plurality of sub-allowances; and
allocating respective sub-allowances to respective sub-periods.

2. A method according to claim 1, comprising:
determining, at the end of a sub-period, a difference between a data usage and the sub-allowance for the sub-period; and
re-allocating the difference to one or more of the remaining sub-periods.

3. A method according to claim 2, wherein the difference is an unused data allowance; and said re-allocating comprises increasing the respective sub-allowance of at least one remaining sub-period.

4. A method according to claim 2, wherein the difference is an exceeded data allowance; and said re-allocating comprises decreasing the respective sub-allowance of at least one remaining sub-period.

5. A method according to any of claims 2 to 4, wherein the step of re-allocating comprises allocating the difference equally among all remaining sub-periods.

6. A method according to any of claims 2 to 4, wherein the step of re-allocating comprises allocating all of the difference to a next one of the sub-periods.

7. A method according to any of claims 1 to 6, comprising receiving user input specifying the sub-periods into which the quota period is divided.

8. A method according to any of claims 1 to 7, wherein the plurality of sub-periods are days; and a first sub-allowance amount is allocated to weekdays and a second sub-allowance amount is allocated to weekends.

9. A method according to any of claims 1 to 8, wherein the total data allowance is first subdivided between a plurality of users, and the method of claim 1 is applied to each user's allocated amount.

10. A method according to any of claims 1 to 9, comprising:
identifying a request for download of a data item having a file size;
determining that the file size exceeds a threshold size;
generating a warning, in response to said determination, that the file size exceeds the threshold size.

11. A method according to claim 10, wherein the threshold size is a remaining amount of sub-allocation for the sub-period in which the request for download of the data item occurs.

12. A method according to any of claims 10 to 11, wherein the threshold size is a predetermined fraction of a remaining amount of the sub-allowance for that sub-period.

13. A method of downloading data over a network for which a data allowance has been allocated according to any of claims 1 to 12.

14. A device for downloading data content from a network, the device comprising:
an interface for connecting to the network; and
a processor configured to:
identify a total data allowance for a quota period;
divide the quota period into a plurality of sub-periods;
divide the total data allowance into a plurality of sub-allowances;
allocate respective sub-allowances to respective sub-periods; and
within a given sub-period, limit downloading of data content to the respective sub-allowance.

15. A computer program comprising instructions such that when the computer program is executed on a computing device, the computing device is arranged to carry out the method steps of any of claims 1 to 13.
